# FASCICULE DE BREVET EUROPEEN

(11) **EP 1 874 598 B1**
(45) Date de publication et mention de la délivrance du brevet: **02.12.2009**
(21) Numéro de dépôt: 06724462.4
(22) Date de dépôt: 20.04.2006
(51) Int. Cl.: B60S 1/40, B60S 1/38

(54) **AGENCEMENT POUR LE MONTAGE BALAI D'ESSUYAGE SUR UNE EXTREMITE DE BRAS D'ENTRAINEMENT**
ANORDNUNG ZUR BEFESTIGUNG EINES WISCHERBLATTS AN EINEM ENDE EINES ANTRIEBSARMS
ARRANGEMENT FOR MOUNTING A WIPER BLADE TO ONE END OF A DRIVE ARM

(30) Priorité: 29.04.2005 FR 0504417
(43) Date de publication de la demande: 09.01.2008
(73) Titulaire: VALEO SYSTEMES D'ESSUYAGE, 78321 La Verrière (FR)
(72) Inventeur: THIENARD, Jean-Claude, F-76200 Dieppe (FR)
(74) Mandataire: Rosolen-Delarue, Katell
(86) Numéro de dépôt international: PCT/EP2006/003632
(87) Numéro de publication internationale: WO 2006/117085

(56) Documents cités:
- WO-A-03/084789
- FR-A- 2 780 013
- FR-A- 2 841 516
- US-A- 2 632 195

## Description

L'invention propose un agencement pour le montage d'un balai d'essuie-glace de type "flat-blade" sur une extrémité de bras d'entraînement en forme de U inversé.

L'invention propose plus particulièrement un agencement pour le montage et l'articulation d'un balai d'essuyage d'un panneau vitré à une extrémité libre d'un bras d'entraînement du balai d'essuyage en balayage alterné, qui comporte un support fixé au balai d'essuyage et un connecteur fixé à l'extrémité libre du bras d'entraînement et qui est monté articulé par rapport au support autour d'un axe transversal d'articulation.

Selon une conception visant à réaliser des essuie-glace de faible hauteur, la structure articulée du balai d'essuyage qui porte la raclette ou lame d'essuyage est supprimée et ce sont des éléments de renfort structurels qui sont associées à la lame d'essuyage souple pour constituer le balai d'essuyage proprement dit, aussi appelé "flat-blade".

Le balai d'essuyage est entraîné en balayage alterné sur la vitre à essuyer par un mécanisme d'entraînement conventionnel qui comporte un bras d'entraînement du balai. Du fait de la forme complexe de la vitre à essuyer, le balai est monté articulé autour d'un axe transversal par rapport au bras d'entraînement, par l'intermédiaire d'un connecteur d'articulation.

L'extrémité libre du bras d'entraînement, qui porte le balai, a globalement la forme d'un tronçon de profilé de section transversale en U inversé ouverte vers le bas, dans laquelle est reçu un connecteur d'articulation du balai par rapport à l'extrémité du bras.

Le connecteur d'articulation est en outre relié au balai d'essuyage par l'intermédiaire d'un support de montage qui est fixé au balai.

Le document WO-A-03.084789 décrit un tel connecteur qui est reçu à l'intérieur de l'extrémité du bras et dans lequel est monté une partie du support de montage.

Selon ce document, le support de montage comporte un muret central d'orientation longitudinale verticale et dont chaque face latérale porte une tige transversale qui coopère avec le connecteur pour réaliser l'articulation du balai par rapport à l'extrémité du bras d'entraînement.

Un tel agencement est particulièrement avantageux car son encombrement transversale est relativement limité réduit.

Cependant, selon cet agencement, le connecteur comporte des pattes arrière qui sont déformables élastiquement et qui coopèrent avec des échancrures réalisées dans les ailes latérales de l'extrémité du bras pour réaliser le verrouillage du connecteur en position dans l'extrémité du bras.

Ces pattes arrière sont relativement fragiles et rendent la conception du connecteur particulièrement complexe.

L'invention a pour but de proposer un agencement pour le montage d'un balai d'essuyage à l'extrémité du bras d'entraînement, pour lequel les moyens de montage du connecteur avec l'extrémité du bras sont relativement simples.

Le document FR-A-2 841 516 propose notamment un agencement conforme au préambule de la revendication 1.

Dans ce but, l'invention propose un agencement du type décrit précédemment, présentant les caractéristiques de la partie caractérisante de la revendication 1.

L'invention propose un agencement du type précédemment décrit dans lequel l'extrémité libre du bras d'entraînement consiste en un tronçon de profilé d'orientation principale longitudinale, qui comporte deux ailes latérales longitudinales verticales reliées entre elles par un dos supérieur dont chaque aile de l'extrémité libre du bras d'entraînement comporte une encoche qui est débouchante au niveau du bord inférieur de l'aile, dans lequel le connecteur comporte deux éléments de liaison dont chacun est reçu dans une encoche associée d'une aile de l'extrémité du bras, chaque élément de liaison étant porté par un flasque longitudinal vertical du connecteur, et dans lequel le support comporte une embase inférieure horizontale qui est fixée au balai d'essuyage, et qui porte une tige d'articulation d'orientation principale transversale coaxiale à l'axe transversal d'articulation, la tige comportant un tronçon qui est reçu en partie dans chaque élément de liaison du connecteur, caractérisé en ce que chaque élément de liaison du connecteur fait saillie transversalement vers l'intérieur du connecteur, et en ce que la face longitudinale verticale interne de chaque flasque comprend une face longitudinale verticale interne qui est en appui transversalement contre une face longitudinale verticale externe en vis-à-vis d'une aile latérale associée de l'extrémité du bras.

Selon d'autres caractéristiques de l'invention :
- les deux ailes latérales longitudinales verticales de l'extrémité libre du bras d'entraînement sont reliées entre elles par un dos supérieur sur lequel prend appui le connecteur une fois monté sur l'extrémité libre du bras d'entraînement.
- le support comporte deux joues longitudinales verticales qui s'étendent verticalement vers le haut depuis l'embase inférieure, dont la face longitudinale verticale interne de chaque joue est reliée à un tronçon d'extrémité de la tige transversale d'articulation, et les joues du support sont agencées transversalement de part et d'autre des flasques du connecteur de manière que chaque flasque du connecteur est agencé transversalement entre une aile de l'extrémité du bras et une joue du support ;
- chaque élément de liaison du connecteur est monté dans l'encoche associée de l'extrémité du bras par emboîtement élastique du connecteur sur l'extrémité du bras et selon un mouvement globalement vers le bas du connecteur par rapport à l'extrémité du bras ;
- chaque élément de liaison du connecteur délimite un logement cylindrique transversal ouvert vers le bas dans lequel le tronçon d'extrémité associé de la tige transversale est monté par emboîtement élastique ;
- chaque encoche d'une aile latérale s'étend globalement longitudinalement vers l'arrière et vers le haut depuis l'ouverture au niveau de laquelle l'encoche débouche dans le bord inférieur de l'aile, et chaque élément de liaison comporte un tronçon arrière cintré et bombé vers l'arrière, qui est en appui contre un bord arrière complémentaire de l'encoche, et un tronçon avant cintré et bombé vers l'arrière qui est en appui contre un bord avant complémentaire de l'encoche ;
- le tronçon avant de l'élément de liaison est apte à se déformer élastiquement vers l'avant lorsque le tronçon d'extrémité associé de la tige transversale est introduit dans le logement cylindrique transversal ;
- chaque aile de l'extrémité du bras comporte une languette inférieure qui est située longitudinalement sur le bord inférieur de l'aile de manière que son bord transversal arrière prolonge le bord avant de l'encoche vers le bas, et l'embase du support comporte un orifice associé à chaque languette inférieure, et dans lequel est reçue la languette inférieure associée ;
- chaque flasque du connecteur comporte un évidement, ou lamage, qui est réalisé dans la face longitudinale verticale externe du flasque, qui est débouchant au moins au niveau du bord d'extrémité inférieure du flasque associé, et dans lequel est reçue la joue associée du support ;
- chaque joue du support est reçue dans le lamage associé avec un jeu longitudinal et/ou vertical entre le bord de la joue et le bord du lamage.

D'autres caractéristiques et avantages de l'invention apparaîtront à la lecture de la description détaillée qui suit pour la compréhension de laquelle on se reportera aux figures annexées parmi lesquelles :
- la figure 1 est une représentation schématique en perspective éclatée de l'agencement conforme à l'invention ;
- la figure 2 est une vue similaire à celle de l'agencement représenté à la figure 1, dans laquelle le balai est monté à l'extrémité du bras ;
- la figure 3 est une vue en coupe suivant un plan longitudinal vertical médian de l'agencement représenté à la figure 1 ;
- la figure 4 est une vue en coupe suivant un plan longitudinal vertical médian de l'agencement représenté à la figure 2.

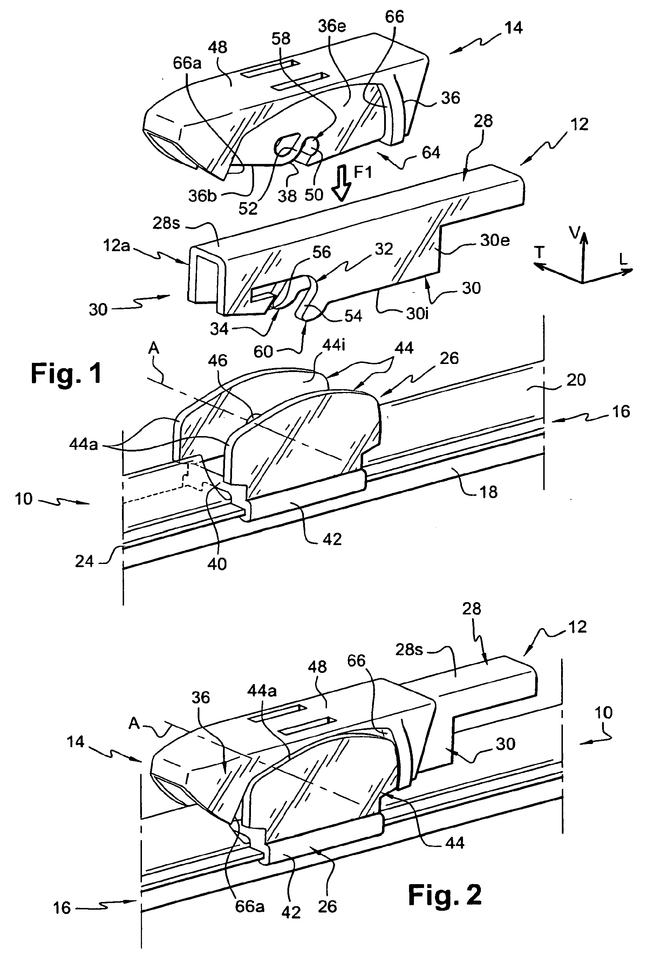

Pour la description de l'invention, on adoptera à titre non limitatif les orientations verticale, longitudinale et transversale selon le repère V, L, T indiqué à la figure 1.

On adoptera aussi l'orientation d'arrière en avant comme étant la direction longitudinale et de droite à gauche en se reportant à la figure 1.

Dans la description qui va suivre, des éléments identiques, similaires ou analogues seront désignés par les mêmes chiffres de référence.

On a représenté aux figures 1 et 2 un balai d'essuyage 10 destiné à être monté à rotation autour d'un axe A transversal à l'extrémité longitudinale avant libre 12a d'un bras d'essuyage 12 par l'intermédiaire d'un connecteur 14.

Le balai d'essuyage 10 comporte une raclette 16 s'étendant longitudinalement, qui est constituée dans sa partie inférieure d'une lame 18 destinée à frotter contre la vitre à essuyer, et dans sa partie supérieure d'un talon de fixation 20.

Le balai d'essuyage 10 comporte aussi des vertèbres de rigidification 24 qui sont chacune reçues dans une rainure complémentaire réalisée dans un bord latéral du talon 20.

Les vertèbres 24 sont conçues de manière à assurer une rigidité au balai d'essuyage 10 permettant de répartir l'effort d'appui de la raclette 16 contre la vitre à essuyer sur toute sa longueur.

Le balai d'essuyage 10 porte un support de montage 26 du balai 10 à l'extrémité 12a du bras sur lequel le connecteur 14 est monté, et qui est agencé longitudinalement globalement au milieu du balai 10, en chevauchant le talon 20 et les vertèbres 24 du balai 10.

L'extrémité 12a du bras 12 consiste globalement en un tronçon de profilé d'orientation principale longitudinale qui est de section transversale verticale en U ouvert vers le bas. L'extrémité 12a du bras 12 comporte ainsi un dos supérieur 28 horizontal et deux joues latérales 30 qui s'étendent verticalement vers le bas depuis les bords latéraux du dos supérieur 28.

Chaque aile 30 comporte une encoche 32 qui est débouchante au niveau du bord longitudinal inférieur 30i de l'aile 30, formant ainsi une ouverture 34 dans le bord inférieur 30i de l'aile, et l'encoche 32 s'étend vers l'arrière et vers le haut depuis l'ouverture 34.

Le connecteur 14 comporte deux flasques 36 longitudinaux verticaux dont chaque flasque 36 s'appuie transversalement contre une aile 30 en vis-à-vis de l'extrémité 12a du bras 12, et dont chaque flasque 36 porte un élément 38 de liaison du connecteur 14 avec l'extrémité 12a du bras 12 et avec le support 26. Pour cela, chaque élément de liaison 38 est reçu dans une encoche 32.

Le support 26 comporte une embase inférieure 40 qui est en appui contre la face supérieure du dos 28 du balai 10 et deux pattes latérales inférieures 42 qui s'étend vers le bas depuis l'embase inférieure 40. Les pattes inférieures 42 sont conformées de manière qu'elles sont réparties transversalement de part et d'autre du dos 28 du balai 10 et de manière à réaliser la fixation du support 26 sur le balai 10.

Le support 26 comporte aussi deux joues longitudinales verticales 44 qui s'étendent verticalement vers le haut depuis chaque bord longitudinal d'extrémité latérale de l'embase inférieure 40 et une tige transversale 46 coaxiale à l'axe A d'articulation qui relie les faces verticales internes 44i en vis-à-vis des deux joues 44.

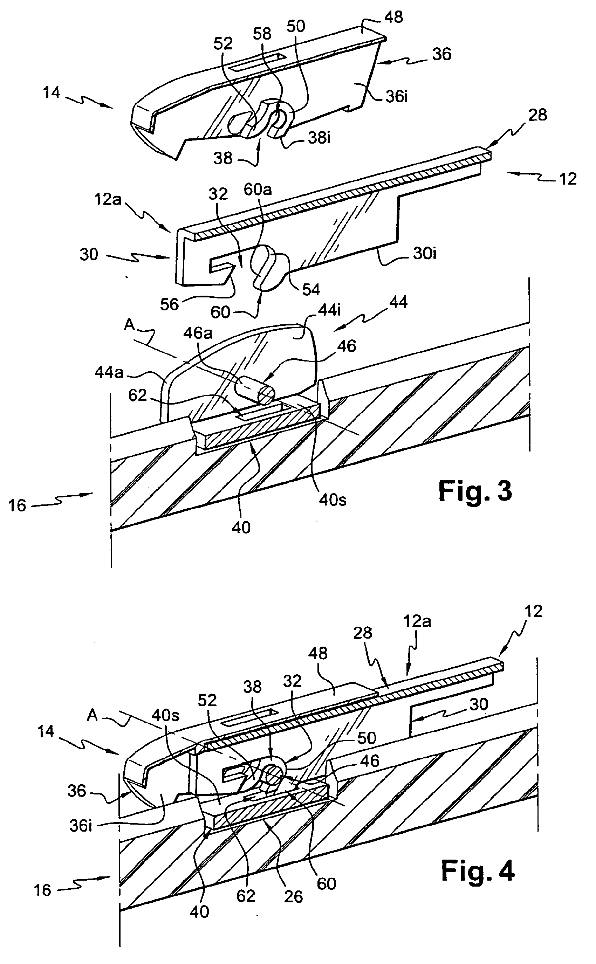

La tige 46 permet de réaliser l'articulation du connecteur 14 par rapport au support 26 autour de l'axe transversal A. Pour cela, comme on peut le voir aux figures 3 et 4, chaque tronçon d'extrémité transversale 46a de la tige 46 est reçu dans un logement transversal complémentaire formé par l'élément de liaison 38 associé.

Conformément à l'invention, et comme on peut le voir aux figures 3 et 4, le connecteur 14 est conformé de manière que chaque élément de liaison 38 fait saillie vers l'intérieur depuis la face verticale interne 36i du flasque 36 associé. De plus, lorsque le connecteur 14 est en position montée sur l'extrémité 12a du bras 12, la face interne 36i de chaque flasque 36 est en appui transversalement contre la face verticale externe 30e en vis-à-vis d'une aile 30 de l'extrémité du bras.

Ainsi, le connecteur 14 est conformé de manière qu'il est monté sur l'extrémité 12a du bras 12 selon un mouvement globalement vertical descendant, comme on l'a représenté à la figure 1 par la flèche F1.

La section verticale transversale du connecteur 14 est elle aussi en forme de U inversé débouchant vers le bas, et le connecteur comporte un dos supérieur 48 globalement horizontal qui est relié à chaque flasque 36, de manière que les flasques 36 s'étendent verticalement vers le bas depuis les bords latéraux du dos 48. Le dos 48 du connecteur est en outre conformé de manière qu'il est en appui vers le bas contre la face supérieure 28s du dos 28 de l'extrémité 12a du bras 12 lorsque le connecteur 14 est monté sur l'extrémité 12a du bras 12.

Puisque les éléments de liaison 38 font saillie vers l'intérieur par rapport aux faces internes 36i des flasques 36, et pour permettre le montage du connecteur 14 sur l'extrémité 12a du bras 12, le connecteur 14 est réalisé de manière que les flasques 36 sont aptes à se déformer élastiquement.

Ainsi, lors du montage du connecteur 14 sur l'extrémité 12a du bras 12, les flasques 36 s'écartent l'un de l'autre, de sorte que la distance entre les extrémités transversales internes en vis-à-vis 38i des éléments de liaison 38 est supérieure à la largeur de l'extrémité 12a du bras 12.

Lorsque le connecteur 14 est en position montée sur l'extrémité 12a du bras 12, les éléments de liaison sont situés en face des encoches 32, les flasques 36 sont alors rappelés élastiquement dans leur position d'origine représentée aux figures 3 et 4, et entraînent les éléments de liaison 38 dans les encoches 32.

Les éléments de liaison 38 sont globalement de forme complémentaire à la forme des encoches 32, de manière à limiter les jeux entre le connecteur 14 et l'extrémité 12a du bras 12, selon les directions longitudinale et verticale. De plus, puisque les faces verticales internes 36i des flasques 36 sont en appui contre les faces verticales externes 30e des joues 30 de l'extrémité 12a du bras 12, les jeux selon la direction transversale sont eux aussi réduits.

Enfin, puisque le dos supérieur 48 du connecteur 14 est en appui contre le dos 28 de l'extrémité 12a du bras 12, et puisque les encoches 32 sont débouchantes au niveau du bord inférieur de chaque aile 30 associée, les éléments de liaison ne peuvent pas sortir des encoches 32 en traversant les ouvertures 34, réalisant ainsi le blocage du connecteur 14 en position montée sur l'extrémité 12a du bras 12.

Postérieurement au montage du connecteur 14 sur l'extrémité 12a du bras 12, l'ensemble ainsi formé par le connecteur 14 et l'extrémité 12a du bras 12 est ensuite monté sur le support de montage 26.

Le montage de cet ensemble sur le support 26 consiste à monter le connecteur 14 et l'extrémité 12a du bras 12 entre les joues 44 du support 26, et à monter les extrémités transversales de la tige 46 dans les éléments de liaison 38, de manière que la face longitudinale verticale externe 36e de chaque flasque 36 est en appui contre la face verticale interne 44i en vis-à-vis d'une joue 44.

Ainsi, chaque flasque 36 du connecteur est situé transversalement entre une aile 30 de l'extrémité 12a du bras 12 et une joue 44 du support de montage 26. Cela permet d'empêcher que les flasques 36 ne s'écartent l'un de l'autre, empêchant ainsi que les éléments de liaison 38 ne sortent des encoches 32.

Chaque tronçon d'extrémité 46a de la tige 46 est monté dans un élément de liaison 38 associé par emboîtement élastique.

Pour cela, comme on peut le voir aux figures 3 et 4, chaque élément de liaison 38 comporte un tronçon avant 52 et un tronçon arrière 50 dont chacun est cintré de sorte qu'il est de forme concave ouvert vers l'arrière.

Les deux tronçons avant 52 et arrière 50 délimitent un logement transversal 58 de forme complémentaire à la tige 46, et qui est débouchant au vers le bas au niveau de l'ouverture 34 par laquelle l'encoche débouche dans le bord inférieur de l'aile 30 associée.

Le tronçon avant 52 est en appui longitudinalement vers l'avant contre le bord avant 56 de l'encoche 32, et le tronçon arrière 50 est en appui longitudinalement vers l'arrière contre le bord arrière 54 de l'encoche 32.

Lors du montage d'une extrémité transversale 46a de la tige 46, le tronçon avant 52 de l'élément de liaison se déforme globalement vers l'arrière, pour avoir une forme globalement rectiligne, afin de permettre le passage de l'extrémité 46a de la tige 46 entre les deux tronçons avant 52 et arrière 50 de l'élément de liaison.

Enfin, lorsque le tronçon d'extrémité transversale 46a de la tige est en position montée dans le logement 58, le tronçon avant 52 se déforme élastiquement pour revenir à sa forme initiale représentée aux figures.

De plus, la forme cintrée des deux tronçons 50, 52 permet de réaliser un blocage vertical de l'extrémité 46a de la tige 46 lorsqu'elle est montée dans le logement transversal 58 associé, tout en permettant la rotation de l'extrémité 46a de la tige 46 dans le logement transversal 58.

Enfin, comme on l'a dit plus haut, chaque encoche 32 s'étend vers l'arrière et vers le haut depuis l'ouverture 34 associée. Par conséquent, les deux tronçons 50, 52 de l'élément de liaison 38 sont conformés de manière que l'insertion de l'extrémité 46a de la tige 46 dans le logement 58 s'effectue selon un mouvement vers l'avant et vers le bas de l'ensemble formé par le connecteur 14 et l'extrémité avant 12a du bras 12 par rapport au support de montage 26.

Selon le mode de réalisation de l'extrémité 12a du bras 12 représenté aux figures, chaque aile 30 est prolongée vers le bas par une languette inférieure 60 et qui est située longitudinalement sur le bord inférieur 30i de l'aile 30 de manière que son bord transversal arrière 60a prolonge le bord arrière 54 de l'encoche 32 vers le bas.

Selon un autre aspect du support de montage 26 conforme à l'invention, son embase inférieure 40 comporte un orifice 62 qui est agencé au dessous de chaque languette 60 et dans lequel est reçue la languette 60 associée.

La dimension longitudinale de l'orifice 62 est déterminée de manière à permettre un déplacement libre de la languette 60 associée dans son volume intérieur, lors du pivotement du balai d'essuyage 10 et du support de montage 26 par rapport au connecteur 14 et à l'extrémité 12a du bras, autour de l'axe transversal A.

Ici, l'embase 40 comporte deux orifices 62 qui sont chacun associés à une languette 60. Cependant, il sera compris que l'invention n'est pas limitée à ce mode de réalisation, et que l'embase 40 peut comporter un orifice unique qui est apte à recevoir les deux languettes 60.

Ces orifices 62 permettent de réduire la distance verticale entre le bord inférieur 30i de chaque aile 30 de l'extrémité 12a du bras 12 et la face supérieure horizontale 40s de l'embase 40 du support 26. Par conséquent, les orifices 62 permettent de limiter l'encombrement vertical de l'agencement conforme à l'invention.

Selon un autre aspect de l'invention représenté aux figures 1 et 2, chaque flasque 36 du connecteur 14 comporte un évidement 64, ou lamage, qui est réalisé dans la face longitudinale verticale externe 36e du flasque 36, et qui est débouchant au niveau du bord longitudinal inférieur 36b du flasque 36.

Le lamage 64 est formé de manière à recevoir une joue 44 associée du support de montage 26, notamment pour améliorer l'aspect de l'agencement selon l'invention.

Le lamage 64 comporte une face de fond 36e qui s'étend dans un plan longitudinal vertical, et un bord interne 66 en forme de "U" inversé ouvert vers le bas.

La face de fond 36e du lamage forme la face longitudinale verticale externe du flasque 36 contre laquelle la face verticale interne 44i en vis-à-vis du flasque 44 est en appui transversalement.

Le bord interne 66 du lamage 64 est situé en vis-à-vis et à distance du bord externe 44a de la joue associée 44 du support 28. Le jeu ainsi formé entre le bord interne 66 du lamage 64 et le bord externe 44a de la joue 44 associée permet au connecteur de pivoter par rapport au support autour de l'axe transversal A d'articulation.

Enfin, lors du montage du connecteur 14 sur le support 26, et pour permettre le mouvement vers l'avant et vers le bas du connecteur 14 par rapport au support de montage 26, le bord interne 66 du lamage 64 comporte un tronçon avant 66a qui est incliné par rapport à la verticale globalement vers l'avant et vers le bas, pour permettre le passage d'une portion avant de la joue 44 associée du support de montage 26.

L'invention a été décrite en association avec un balai de type "flat-blade" selon un mode de réalisation particulier. Cependant, il sera compris que l'invention n'est pas limitée à ce mode de réalisation, et que l'agencement selon l'invention peut être utilisé pour un autre type de balai d'essuyage "flat-blade", le support de montage comportant alors des moyens associés pour sa fixation sur le balai.

## Revendications

1. Agencement pour le montage et l'articulation d'un balai d'essuyage (10) d'un panneau vitré à une extrémité libre (12a) d'un bras (12) d'entraînement du balai d'essuyage (10) en balayage alterné, qui comporte un support (26) fixé au balai d'essuyage (10) et un connecteur (14) fixé à l'extrémité libre (12a) du bras d'entraînement (12) et qui est monté articulé par rapport au support (26) autour d'un axe transversal (A) d'articulation,
- dans lequel l'extrémité libre (12a) du bras d'entraînement (12) comporte deux ailes latérales (30) comprenant au moins une encoche (32),
- dans lequel le connecteur (14) comporte au moins deux éléments de liaison (38) portés chacun par une flasque (36) longitudinale verticale du connecteur (14) et reçus dans l'encoche (32) associée, et
- dans lequel le support (26) porte un axe (46) d'articulation d'orientation principale transversale coaxiale à l'axe transversal (A) d'articulation, l'axe (46) comportant un tronçon (46a) qui est reçu en partie dans chaque élément de liaison (38) du connecteur (14), **caractérisé en ce que** chaque élément de liaison (38) du connecteur (14) fait saillie transversalement vers l'intérieur du connecteur (14) par rapport aux flasques (36), et **en ce que** chaque flasque (36) comprend une face longitudinale verticale interne (36i) qui est en appui transversalement contre une face longitudinale verticale externe (30e) en vis-à-vis d'une aile latérale (30) associée de l'extrémité (12a) du bras (12).

2. Agencement selon la revendication précédente, **caractérisé en ce que**, les deux ailes latérales (30) longitudinales verticales de l'extrémité libre (12a) du bras d'entraînement sont reliées entre elles par un dos supérieur (28) sur lequel prend appui le connecteur (14) une fois monté sur l'extrémité libre (12a) du bras d'entraînement.

3. Agencement selon la revendication 1 ou 2, **caractérisé en ce que** le support (26) comporte deux joues (44) longitudinales verticales qui s'étendent verticalement vers le haut depuis l'embase inférieure (40), dont la face longitudinale verticale interne (44i) de chaque joue est reliée à un tronçon d'extrémité (46e) de la tige transversale (46) d'articulation, et **en ce que** les joues du support (26) sont agencées transversalement de part et d'autre des flasques (36) du connecteur (14) de manière que chaque flasque (36) du connecteur (14) est agencé transversalement entre une aile (30) de l'extrémité (12a) du bras (12) et une joue (44) du support (26).

4. Agencement selon l'une quelconque des revendications 1 à 3, **caractérisé en ce que** chaque élément de liaison (38) du connecteur (14) est monté dans l'encoche (32) associée de l'extrémité (12a) du bras (12) par emboîtement élastique du connecteur (14) sur l'extrémité (12a) du bras (12) et selon un mouvement globalement vers le bas du connecteur (14) par rapport à l'extrémité (12a) du bras (12).

5. Agencement selon l'une quelconque des revendications 1 à 4, **caractérisé en ce que** chaque élément de liaison (38) du connecteur (14) délimite un logement cylindrique (58) transversal ouvert vers le bas dans lequel le tronçon d'extrémité (46a) associé de la tige transversale (46) est monté par emboîtement élastique.

6. Agencement selon la revendication 4 ou 5, dans lequel chaque encoche (32) d'une aile (30) latérale s'étend globalement longitudinalement vers l'arrière et vers le haut depuis une ouverture (34) au niveau de laquelle l'encoche (32) débouche dans le bord inférieur (30i) de l'aile (30), **caractérisé en ce que** chaque élément de liaison (38) comporte un tronçon arrière (50) cintré et bombé vers l'arrière, qui est en appui contre un bord arrière (54) complémentaire de l'encoche (32), et un tronçon avant (52) cintré et bombé vers l'arrière qui est en appui contre un bord avant (56) complémentaire de l'encoche (32).

7. Agencement selon la revendication précédente, **caractérisé en ce que** le tronçon avant (52) de l'élément de liaison (38) est apte à se déformer élastiquement vers l'avant lorsque le tronçon d'extrémité (46a) associé de la tige transversale (46) est introduit dans le logement cylindrique transversal (58).

8. Agencement selon l'une quelconque des revendications 1 à 7, dans lequel chaque aile (30) de l'extrémité (12a) du bras (12) comporte une languette inférieure (60) qui est située longitudinalement sur le bord inférieur (30i) de l'aile (30) de manière que son bord transversal arrière (60a) prolonge le bord arrière (54) de l'encoche (32) vers le bas, **caractérisé en ce que** l'embase du support (26) comporte un orifice (62) associé à chaque languette (60) inférieure, et dans lequel est reçue la languette (60) inférieure associée.

9. Agencement selon l'une quelconque des revendications 1 à 8, **caractérisé en ce que** chaque flasque (36) du connecteur (14) comporte un évidement (64), ou lamage, qui est réalisé dans la face longitudinale verticale externe (36e) du flasque (36), qui est débouchant au moins au niveau du bord d'extrémité inférieure (36i) du flasque (36) associé, et dans lequel est reçue la joue (44) associée du support (26).

10. Agencement selon la revendication précédente, **caractérisé en ce que** chaque joue (44) du support (26) est reçue dans le lamage associé (64) avec un jeu longitudinal et/ou vertical entre le bord (44a) de la joue (44) et le bord (66) du lamage (64).

## Claims

1. An arrangement for mounting and jointing a wiper blade (10) of a glazing panel at a free end (12a) of an arm (12) driving the wiper blade (10) in an alternate sweeping which includes a support (26) fixed to the wiper blade (10) and a connector (14) fixed to the free end (12a) of the driving arm (12) and which is jointingly mounted with respect to the support (26) about a transversal jointing axis (A),
- wherein said free end (12a) of the driving arm (12) includes two side wings (30) including at least one notch (32),
- wherein the connector (14) includes at least two linking elements (38), each one being borne by a vertical and longitudinal flange (36) of the connector (14) and received in the associated notch (32), and
- wherein the support (26) bears an axis (46) for the jointing having a main transversal orientation coaxial to the transversal jointing axis (A), said axis (46) including a segment (46a) which is received partly in each linking element (38) of the connector (14),
**characterised in that** each linking element (38) of the connector (14) transversally protrudes towards the inside of the connector (14) with respect to the flanges (36) and **in that** each flange (36) includes a vertical longitudinal inner face (36i) which transversally rests against a vertical longitudinal outer face (30e), opposite the associated side wing (30) of the end (12a) of the arm (12).

2. An arrangement according to the previous claim, **characterised in that** both vertical longitudinal side wings (30) of the free end (12a) of the driving arm are connected together by an upper back (28) on which the connector (14) rests when mounted on the free end (12a) of the driving arm.

3. An arrangement according to claim 1 or 2, **characterised in that** the support (26) includes two vertical longitudinal side flaps (44) extending vertically upwards from the lower base (40), the vertical longitudinal inner face (44i) of each flap being connected to an end segment (46e) of the transversal jointing rod (46) and **in that** the side flaps of the support (26) are transversally arranged on either side of the flanges (36) of the connector (14), so that each flange (36) of the connector (14) is transversally arranged between a wing (30) of the end (12a) of the arm (12) and a side flap (44) of the support (26).

4. An arrangement according to any one of claims 1 to 3, **characterised in that** each linking element (38) of the connector (14) is mounted in the associated notch (32) of the end (12a) of the arm (12) through a resilient nesting of the connector (14) on the end (12a) of the arm (12) and according to a globally downwards motion of the connector (14) with respect to the end (12a) of the arm (12).

5. An arrangement according to any one of claims 1 to 4, **characterised in that** each linking element (38) of the connector (14) defines a transversal cylindrical recess (58) opened downwards wherein the associated end segment (46a) of the transversal rod (46) is mounted through a resilient nesting.

6. An arrangement according to claims 4 or 5, wherein each notch (32) of a side wing (30) globally extends longitudinally rearwards and upwards from an opening (34) at the level of which the notch (32) opens into the lower edge (30i) of the wing (30), **characterised in that** each linking element (38) includes a bent rear segment (50) doomed rearwards which rests against a rear edge (54) matching the notch (32) and a bent front segment (52) doomed rearwards and which rests against a front edge (56) matching the notch (32).

7. An arrangement according to the preceding claim, **characterised in that** the front segment (52) of the linking element (38) is capable of elastically deforming frontwards when the associated end segment (46a) of the transversal rod (46) is introduced into the transversal cylindrical recess (58).

8. An arrangement according to any one of claims 1 to 7, wherein each wing (30) of the end (12a) of the arm (12) includes a lower lug (60) which is located longitudinally on the lower edge (30i) of the wing (30) so that the rear transversal edge thereof (60a) extends the rear edge (54) of the notch (32) downwards, **characterised in that** the base of the support (26) includes a hole (62) associated with each lower lug (60), and wherein the associated lower lug (60) is received.

9. An arrangement according to any one of claims 1 to 8, **characterised in that** each flange (36) of the connector (14) includes a recess (64), or spot facing which is provided in the vertical longitudinal outer face (36e) of the flange (36) which opens at least at the level of the lower end edge (36i) of the associated flange (36) and wherein the associated side flap (44) of the support (26) is received.

10. An arrangement according to the preceding claim, **characterised in that** each side flap (44) of the support (26) is received in the associated spot facing (64) with a longitudinal and/or vertical clearance between the edge (44a) of the side flap (44) and the edge (66) of the spot facing (64).

## Patentansprüche

1. Anordnung für die Montage und die Gelenkigkeit eines Wischblatts (10) einer Scheibe an einem freien Ende (12a) eines Antriebsarms des Wischblatts (10) für abwechselndes Wischen, die einen am Wischblatt (10) befestigten Träger (26) und einen am freien Ende (12a) des Antriebsarms (12) befestigten Stecker (14) umfasst, und die in Bezug auf den Träger (26) um eine Gelenkquerachse (A) herum gelenkig montiert ist,
- bei der das freie Ende (12a) des Antriebsarms (12) zwei seitliche Flügel (30) umfasst, die mindestens eine Kerbe (32) aufweisen,
- bei der der Stecker (14) mindestens zwei Verbindungselemente (38) umfasst, die jeweils von einem vertikalen Längsflansch (36) des Steckers (14) getragen und in der zugehörigen Kerbe (32) aufgenommen werden, und
- bei der der Träger (26) eine Gelenkachse (46) trägt, die hauptsächlich quer ausgerichtet ist und zur Gelenkquerachse (A) koaxial verläuft, wobei die Achse (46) einen Abschnitt (46a) aufweist, der zum Teil in jedem Verbindungselement (38) des Steckers (14) aufgenommen wird,
**dadurch gekennzeichnet, dass** jedes Verbindungselement (38) des Steckers (14) im Verhältnis zu den Flanschen (36) quer in das Innere des Steckers (14) hineinragt, und dass jeder Flansch (36) eine vertikale Längsinnenseite (36i) aufweist, die sich quer gegen eine vertikale Längsaußenseite (30e) abstützt, gegenüber einem mit dem Ende (12a) des Arms (12) verbundenen Seitenflügel (30).

2. Anordnung gemäß dem vorigen Anspruch, **dadurch gekennzeichnet, dass** die beiden vertikalen Längsseitenflügel (30) des freien Endes (12a) des Antriebsarms verbunden sind über einen oberen Rücken (28), an dem sich der Stecker (14) abstützt, nachdem er am freien Ende (12a) des Antriebsarms angebracht wurde.

3. Anordnung gemäß Anspruch 1 oder 2, **dadurch gekennzeichnet, dass** der Träger (26) zwei vertikale Längswangen (44) umfasst, die sich ab einem Innensockel (40) erstrecken, wobei die vertikale Längsinnenseite (44i) jeder Wange mit einem Endabschnitt (46e) der Gelenkquerstange (46) verbunden ist, und dass die Wangen des Trägers (26) auf beiden Seiten der Flansche (36) des Steckers (14) quer angeordnet sind, so dass jeder Flansch (36) des Steckers (14) quer zwischen einem Flügel (30) des Endes (12a) des Arms (12) und einer Wange (44) des Trägers (26) angeordnet ist.

4. Anordnung gemäß einem der Ansprüche 1 bis 3, **dadurch gekennzeichnet, dass** jedes Verbindungselement (38) des Steckers (14) in der Kerbe (32) montiert ist, die dem Ende (12a) des Arms (12) zugeordnet ist, durch elastisches Einklinken des Steckers (14) am Ende (12a) des Arms (12) und gemäß einer in Bezug auf das Ende (12a) des Arms (12) global nach unten des Steckers (14) gerichteten Bewegung.

5. Anordnung gemäß einem der Ansprüche 1 bis 4, **dadurch gekennzeichnet, dass** jedes Verbindungselement (38) des Steckers (14) eine nach unten geöffnete zylindrische Queraufnahme (58) begrenzt, in die der der Querstange (46) zugeordnete Endabschnitt (46a) elastisch eingeklinkt wird.

6. Anordnung gemäß Anspruch 4 oder 5, bei der sich jede Kerbe (32) eines Seitenflügels (30) global in Längsrichtung nach hinten und nach oben erstreckt, ab einer Öffnung (34), in deren Bereich die Kerbe (32) in den unteren Rand (30i) des Flügels (30) mündet, **dadurch gekennzeichnet, dass** jedes Verbindungselement (38) einen gekrümmten und nach hinten gewölbten hinteren Abschnitt (50) umfasst, der sich gegen einen die Kerbe (32) ergänzenden hinteren Rand (54) abstützt, und einen gekrümmten und nach hinten gewölbten vorderen Abschnitt (52), der sich gegen einen die Kerbe (32) ergänzenden vorderen Rand (56) abstützt.

7. Anordnung gemäß dem vorigen Anspruch, **dadurch gekennzeichnet, dass** der vordere Abschnitt (52) des Verbindungselements (38) sich elastisch nach vorne verformen kann, wenn der der Querstange (46) zugeordnete Endabschnitt (46a) in die zylindrische Queraufnahme (58) eingeführt ist.

8. Anordnung gemäß einem der Ansprüche 1 bis 7, bei der jeder Flügel (30) des Endes (12a) des Arms (12) eine Innenlasche (60) umfasst, die in Längsrichtung auf dem unteren Rand (30i) des Flügels (30) sitzt, so dass sein hinterer Querrand (60a) den hinteren Rand (54) der Kerbe (32) nach unten verlängert, **dadurch gekennzeichnet, dass** der Sockel des Trägers (26) eine jeder Innenlasche (60) zugeordnete Öffnung (62) umfasst, in der die zugeordnete Innenlasche (60) aufgenommen wird.

9. Anordnung gemäß einem der Ansprüche 1 bis 8, **dadurch gekennzeichnet, dass** jeder Flansch (36) des Steckers (14) eine Aussparung (64) bzw. Senkung umfasst, die in der vertikalen Längsaußenseite (36e) des Flansches (36) vorgesehen ist, und die sich mindestens im Bereich des unteren Endrandes (36i) des zugehörigen Flansches (36) öffnet, und in der die dem Träger (26) zugeordnete Wange (44) aufgenommen wird.

10. Anordnung gemäß dem vorigen Anspruch, **dadurch gekennzeichnet, dass** jede Wange (44) des Trägers (26) in der zugeordneten Senkung (64) aufgenommen wird, mit einem länglichen und/oder vertikalen Spiel zwischen dem Rand (44a) der Wange (44) und dem Rand (66) der Senkung (64).
